# EUROPEAN PATENT APPLICATION

(11) **EP 4 529 760 A1**
(43) Date of publication of application: **02.04.2025**
(21) Application number: 23207070.6
(22) Date of filing: 31.10.2023
(51) Int. Cl.: A01K 1/01

(54) **PET TOILET AND CONTROL METHOD THEREOF**

(30) Priority: 27.09.2023 CN 202322647557 U
(71) Applicant: Petpivot Inc, Portland, OR 97209 (US)
(72) Inventor: TANG, Tieqiang, Yuxi Village, Yuxi Town, Daxiang District,Shaoyang City (CN)
(74) Representative: Lin Chien, Mon-Yin

(57) **Abstract**

The present disclosure provides a pet toilet and a control method thereof. The pet toilet includes a circuit board, a base, and a roller rotatably arranged on the base. A weighing sensor electrically connected to the circuit board and configured to detect a weight is arranged on the base, and a distance sensor electrically connected to the circuit board and configured to measure a distance is arranged on the base or the roller. The circuit board controls the roller to rotate according to a signal fed back by the weighing sensor and a signal fed back by the distance sensor when a pet enters the roller, thus solving the problem of misjudgment easily caused the fact that only the weighing sensor is used to perform waste clearing in the prior art. The probability of misjudgment on the defecation of the pet is effectively reduced.

## Description

### CROSS-REFERENCE TO RELATED APPLICATIONS

The application claims priority of Chinese patent application CN2023226475571, filed on 2023/9/27, which is incorporated herein by reference in its entireties.

### TECHNICAL FIELD

The present disclosure relates to the technical field of pet supplies, and in particular, to a pet toilet and a control method thereof.

### BACKGROUND

An intelligent litter box includes a base and a roller arranged on the base. The base is also provided with a collection basin for collecting waste. When the roller rotates relative to the base, litter and waste formed by combining feces and litter are first sifted through a sifter inside the roller. The litter passes through meshes of the sifter and is temporarily stored, and the waste falls onto the collection basin from an opening on the roller as the roller rotates. After completing the action, the roller rolls back to an initial position.

At present, the intelligent litter box is provided with a weighing sensor on the base to determine whether a cat has entered the roller for defecation. That is, when the cat has entered the roller, the weighing sensor detects a change in weight and provides a feedback to a controller. After the cat leaves, the weighing sensor provides a feedback to the controller to determine that the cat has left. After the cat leaves, the roller is controlled to rotate to discharge the waste. However, in this way, when the cat jumps over the roller to play or sleep, an action of cleaning up waste would also be performed after the cat leaves. This easily causes a misjudgment.

### SUMMARY

The present disclosure aims to provide a pet toilet and a control method thereof, which is used to solve the problem of misjudgment easily caused the fact that only the weighing sensor is used to perform waste clearing in the prior art.

In order to solve the technical problem, the technical scheme provided by the present disclosure is as follows.

A pet toilet, wherein the pet toilet includes a circuit board, a weighing sensor, a distance sensor, a base, and a roller rotatably arranged on the base; the weighing sensor is electrically connected to the circuit board and is configured to detect a weight, and the distance sensor is electrically connected to the circuit board and is configured to measure a distance; and the circuit board controls the roller to rotate according to a signal fed back by the weighing sensor and a signal fed back by the distance sensor when a pet enters the roller.

Further, the weighing sensor is arranged on the base or the roller; a supporting column is arranged on the base; the distance sensor is located on the supporting column; a first opening is formed in an end surface, corresponding to the supporting column, of the roller; and at an initial position, the distance sensor is arranged in a manner of corresponding to the first opening.

Further, the first opening is located on a central axis of rotation of the roller.

Further, there are a plurality of weighting sensors.

Further, there are four weighing sensors respectively arranged close to four end corners of the base.

Further, a rear end surface of the roller is provided with a first gear; an upper surface of the base is sunken downwards to form an avoiding slot matched with the roller; one end of the supporting column located in the avoiding slot is opposite to an end surface of the roller; the avoiding slot is provided with a first receiving slot for carrying two ends of the roller; the base is provided with a motor electrically connected to the circuit board to drive the roller to rotate; a rotating shaft of the motor is connected with a second gear engaged with the first gear; the second gear is located on the first receiving slot; and the roller rotates through the first gear when the motor drives the second gear to rotate.

Further, the base is provided with a Hall sensor electrically connected to the circuit board; the roller is provided with several magnetic suction pieces used in conjunction with the Hall sensor; and the circuit board drives the motor according to an electrical signal fed back by the Hall sensor.

Further, a second opening configured to waste or pet litter is formed in the roller; the second opening is located at a top of the roller when the roller is at the initial position; the base is provided with a collection cavity for collecting waste; a third opening communicated to the collection cavity is formed in the base; and the second opening is opposite to the third opening in the rotating process of the roller.

Further, the Hall sensor is located on a supporting column; there are two magnetic suction pieces; one magnetic suction piece is opposite to the Hall sensor when the roller is at the initial position; and the other magnetic suction piece is opposite to the Hall sensor when the third opening directly faces the third opening.

The present disclosure also provides a control method applicable to the above pet toilet, wherein the control method includes:
detecting through the weighing sensor that a weight increases;
detecting through the distance sensor that a distance decreases;
detecting through the weighing sensor that the weight decreases;
detecting through the distance sensor that the distance increases; and
performing a waste clearing action to control the roller to rotate to discharge waste.

Further, before the step of performing a waste cleaning action, the control method further includes steps of:
detecting no change in the weight through the weighing sensor within a first preset time period.

Further, after the step of detecting that a distance decreases through the distance sensor, the control method further includes steps of:
starting a timer, and forming first time.

Further, after the step of detecting that a distance decreases through the distance sensor, the control method further includes steps of:
recording first data, wherein the first data includes a first weight, a number of times of entry, and a quantity of pets that have entered the roller; the first weight is a weight increased after the pet enters the roller; the number of times of entry is a serial number of a pet entering the roller before clearing; and the quantity of pets that have entered the roller is a quantity of pets that have entered the roller before clearing.

Further, after the step of detecting through the distance sensor that the distance increases and before the step of "detecting no change in the weight through the weighing sensor within a first preset time period", the control method further includes:
stopping the timer;
determining whether the first time is greater than a second preset time period; and
if so, recording an actual number of times of defecation, wherein the actual number of times of defecation is a quantity of pets that have entered the roller before clearing and stay in the roller for the second preset time period.

Further, after the step of determining whether the first time is greater than a second preset time period, the control method further includes steps of:
if no, subtracting the quantity of pets that have entered the roller by 1, and clearing the first weight.

Further, before the step of performing a waste cleaning action, the control method further includes steps of:
detecting a change in the weight within a first preset time period; and
starting to perform the control method from the step of detecting through the weighing sensor that a weight increases.

Further, after the step of performing a waste cleaning action, the control method further includes steps of:
clearing the first time and the first data.

Further, after the step of detecting through the distance sensor that a weight decreases, the control method further includes steps of:
if no, subtracting the quantity of pets that have entered the roller by 1, and clearing the first weight.

Further, after the step of detecting through the distance sensor that the distance increases and before the step of determining whether the first time is greater than a second preset time period, the control method further includes steps of:
matching the first data.

Further, after the step of detecting that a distance decreases through the distance sensor, the control method further includes steps of:
if no, recording the increased weight.

Compared with the prior art, the present disclosure has the beneficial effects below: In the present disclosure, the weighing sensor and the distance sensor are arranged on the pet toilet. When the pet enters the roller, the weighing sensor feeds back, to the circuit board, an electric signal indicating that a weight changes, and the distance sensor feeds back, to the circuit board, an electric signal indicating that a detected distance changes. The circuit board can determine, according to the two signals, that there is a pet entering the roller for defecation, so that after the pet leaves the roller, the roller can be controlled to rotate, thus solving the problem of misjudgment easily caused the fact that only the weighing sensor is used to perform waste clearing in the prior art. The probability of misjudgment on the defecation of the pet is effectively reduced; the number of times of rotation of the roller is reduced; and the power consumption is reduced.

### BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.
FIG. 1 is a three-dimensional diagram of a pet toilet according to the present disclosure;
FIG. 2 is a structural diagram of a base on a pet toilet according to the present disclosure;
FIG. 3 is an exploded diagram of a base on a pet toilet according to the present disclosure;
FIG. 4 is a structural diagram of a roller on a pet toilet according to the present disclosure;
FIG. 5 is a flowchart of a control method for a pet toilet according to the present disclosure; and
FIG. 6 is a flowchart of another embodiment of a control method for a pet toilet according to the present disclosure.

### DETAILED DESCRIPTION OF THE EMBODIMENTS

The accompanying drawings in the embodiment of the present disclosure are combined, The technical scheme in the embodiment of the present disclosure is clearly and completely described, Obviously, the described embodiment is only a part of the embodiment of the present disclosure, but not all embodiments are based on the embodiment of the present disclosure, and all other embodiments obtained by ordinary technicians in the field on the premise of not doing creative work belong to the protection range of the present disclosure.

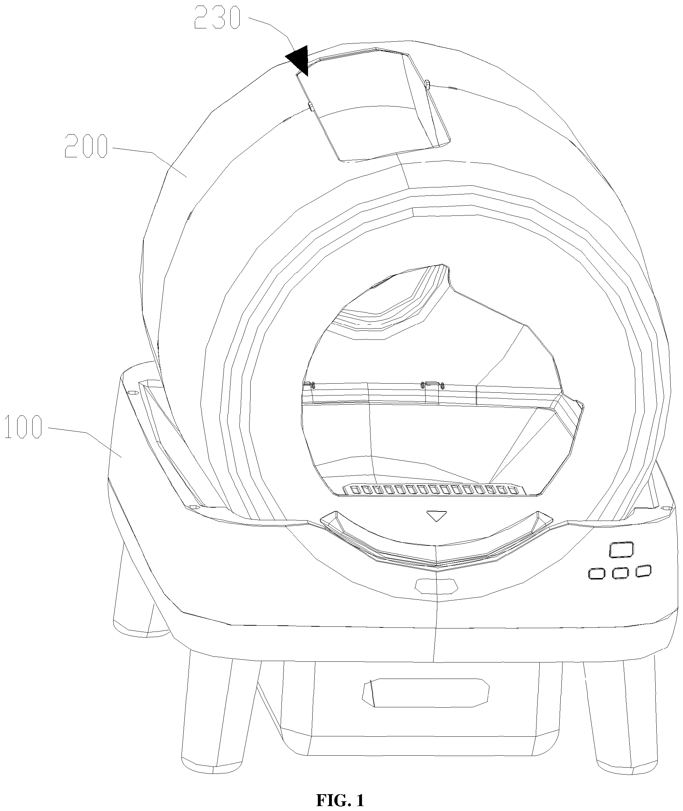

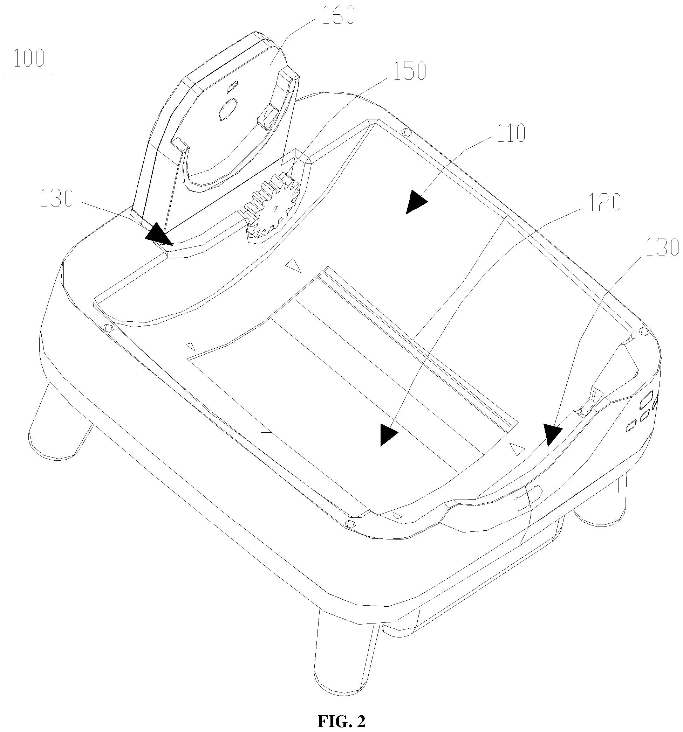

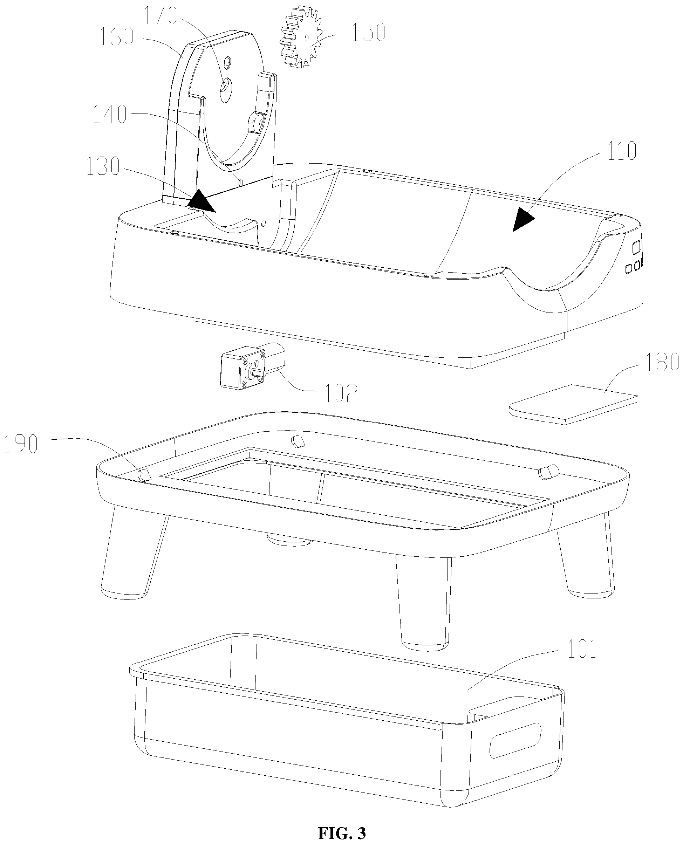

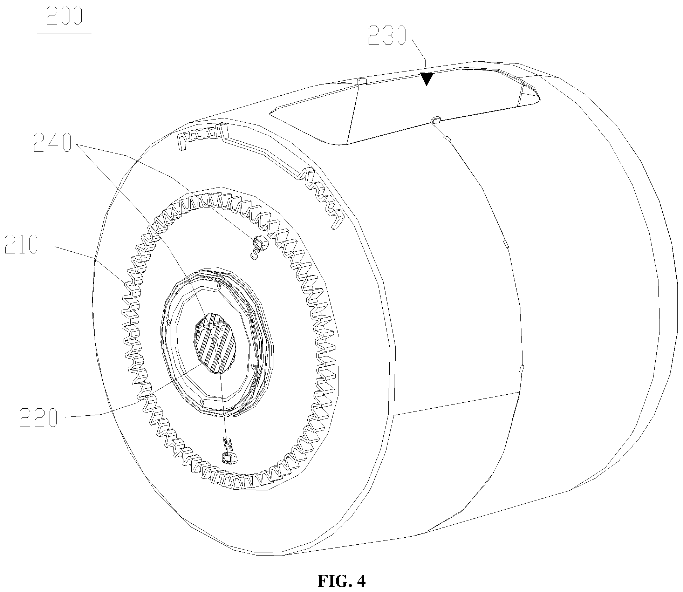

Referring to FIG. 1 to FIG. 4, a pet toilet in the embodiments of the present disclosure is provided.

The pet toilet includes a circuit board 180, a base 100, and a roller 200 rotatably arranged on the base 100. A weighing sensor 190 electrically connected to the circuit board 180 and configured to detect a weight is arranged on the base 100, and a distance sensor 170 electrically connected to the circuit board 180 and configured to measure a distance is arranged on the base 100 or the roller 200. The circuit board 180 controls the roller 200 to rotate according to a signal fed back by the weighing sensor 190 and a signal fed back by the distance sensor 170 when a pet enters the roller 200.

In this embodiment, the weighing sensor 190 and the distance sensor 170 are arranged on the pet toilet. When the pet enters the roller 200, the weighing sensor 190 feeds back, to the circuit board 180, an electric signal indicating that a weight changes, and the distance sensor 170 feeds back, to the circuit board 180, an electric signal indicating that a detected distance changes. The circuit board 180 can determine, according to the two signals, that there is a pet entering the roller 200 for defecation, so that after the pet leaves the roller 200, the roller 200 can be controlled to rotate, thus solving the problem of misjudgment easily caused the fact that only the weighing sensor 190 is used to perform waste clearing in the prior art. The probability of misjudgment on the defecation of the pet is effectively reduced; the number of times of rotation of the roller 200 is reduced; and the power consumption is reduced.

Specifically, in the embodiment described above, the base 100 is provided with a supporting column 160. The distance sensor 170 is located on the supporting column 160. A first opening 220 is formed in an end surface, corresponding to the supporting column 160, of the roller 200; and at an initial position of the distance sensor 170, the first opening 220 is arranged in a manner of corresponding to the distance sensor 170. That is, when the roller 200 is not in a waste clearing state, the distance sensor 170 is opposite to the first opening 220. That is, after the pet enters the roller 200, the distance sensor 170 can detect that a distance changes.

The circuit board 180 can be arranged on the base 100. Of course, in other embodiments, the circuit board 180 can also be arranged on the roller 200 or the supporting column 160, or even arranged externally to independently form a controller. The position of the circuit board 180 will not be limited here.

In an embodiment, the first opening 220 is located on a central axis of rotation of the roller 200, so that the distance sensor 170 is always opposite to the first opening 220. Specifically, the distance sensor 170 is configured to detect a position of a center of an inner bottom of the roller 200 at the initial position, which means that after a pet enters the roller, the distance sensor can detect that the distance changes.

In an embodiment, in order to improve the weighing accuracy, there are a plurality of weighing sensors 190. Specifically, in this embodiment, there are four weighing sensors 190 which are respectively arranged close to four end corners of the base 100. This can further improve the weighing accuracy and avoid the impact of different positions after the pet enters the roller 200.

In an embodiment, a rear end surface of the roller 200 is provided with a first gear 210; an upper surface of the base 100 is sunken downwards to form an avoiding slot 110 matched with the roller 200; one end of the supporting column 160 located in the avoiding slot 110 is opposite to an end surface of the roller 200; the avoiding slot 110 is provided with a first receiving slot 130 for carrying two ends of the roller 200; the base 100 is provided with a motor 102 electrically connected to the circuit board 180 to drive the roller 200 to rotate; a rotating shaft of the motor 102 is connected with a second gear 150 engaged with the first gear 210; and the second gear 150 is located on the first receiving slot 130. In this way, when the motor 102 drives the second gear 150 to rotate, the roller 200 rotates through the first gear 210.

In an embodiment, the base 100 is provided with a Hall sensor 140 electrically connected to the circuit board 180; and the roller 200 is provided with several magnetic suction pieces 240 used in conjunction with the Hall sensor 140. When the roller 200 rotates to a certain position, namely, when the magnetic suction pieces 240 move to a certain position, the Hall sensor 140 feeds back a signal to the circuit board 180 when detecting a change in a magnetic field. Therefore, the circuit board 180 controls the motor 102 to work.

Specifically, the magnetic suction pieces 240 can be magnets. A second opening 230 configured to waste or pet litter is formed in the roller 200; the second opening 230 is located at a top of the roller 200 when the roller 200 is at the initial position; the base 100 is provided with a collection cavity 101 for collecting waste; a third opening 120 communicated to the collection cavity 101 is formed in the base 100; and the second opening 230 is opposite to the third opening 120 in the rotating process of the roller 200. Therefore, the waste on the roller 200 can fall into the collection cavity 101 via the second opening 230 and the third opening 120.

The Hall sensor 140 is located on a supporting column 160; there are two magnetic suction pieces 240; one magnetic suction piece 240 is opposite to the Hall sensor 140 when the roller 200 is at the initial position; and the other magnetic suction piece 240 is opposite to the Hall sensor 140 when the third opening 120 directly faces the third opening 120. In this way, when the roller 200 rotates and the second opening 230 is opposite the third opening 120, the Hall sensor 140 feeds back a signal to the circuit board 180 when detecting a change in the magnetic field. The circuit board 180 controls the motor 102 to rotate anticlockwise according to the signal. When the roller 200 returns to the initial position, the Hall sensor 140 feeds back a signal to the circuit board 180 when detecting a change in the magnetic field again. The circuit board 180 controls the motor 102 to stop rotating according to the signal, so as to control the roller 200 to rotate.

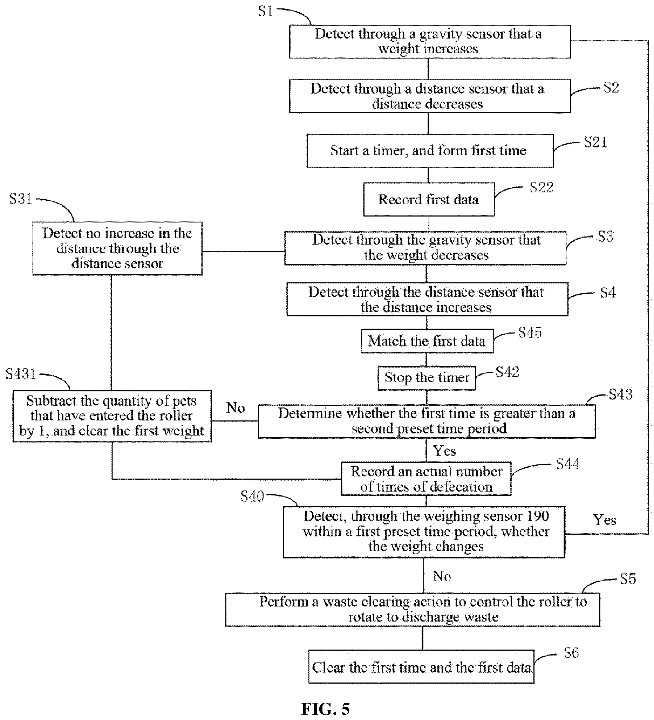

Referring to FIG. 5, the present disclosure further provides a control method applicable to the pet toilet described above. The control method includes the following steps:
S1, it is detected through the weighing sensor 190 that a weight increases;

That is, when the weighing sensor 190 detects that the weight increases, it indicates that there is a pet on the pet toilet, and step S2 is executed. If it is not detected that a weight increases, no action will be performed.

S2, it is detected through the distance sensor 170that a distance decreases.

That is, when the distance sensor 170 detects that the distance changes, it indicates that there is a pet entering the roller 200, and step S3 is executed. If the distance detected by the distance sensor 170 does not change, the increased weight is recorded. This weight may be a weight of the pet, a magnitude of another external force, and the like.
S3, it is detected through the weighing sensor 190 that the weight decreases;

S4, it is detected through the distance sensor 170that the distance increases.

That is, when the weighing sensor 190 detects that the weight decreases and the distance sensor 170 detects that the distance increases, it indicates that the pet has left the roller 200.

S5, a waste clearing action is performed to control the roller 200 to rotate to discharge waste. In this way, after the pet enters the roller 200 for defecation, the roller 200 rotates to discharge the waste from the roller 200 to achieve the waste clearing action. This prevents a misjudgment on performing the waste clearing operation due to the fact that a pet sleeps on the top of the roller 200 or steps on the top of the roller 200, and reduces the misjudgment of waste clearing.

It should be noted that the distance sensor 170 and the weighing sensor 190 detect and feed back signals to the circuit board 180 in real time, so that the circuit board 180 controls the motor 102 to rotate according to a distance decrease detected by the distance sensor 170 after a pet enters the roller 200, a distance increase detected after the pet leaves the roller 200, and a weight increase and weight decrease detected by the weighing sensor 190, that is, the roller 200 is controlled to perform the waste clearing action. In addition, step S2 can also be executed before step S 1, and step S4 can also be executed before step S3. An order in which step S 1 and step S2 are executed, and an order in which step S3 and step S4 are executed are not limited here.

In an embodiment, before step S5, the control method further includes a step: S40, detecting, through the weighing sensor 190 within a first preset time period, whether the weight changes.

When no change in the weight is detected by the weighing sensor 190 within the first preset time period, the waste clearing action is performed.

That is, after the pet enters the roller 200 and leaves the roller 200, if no other pet enters the roller 200 within the first preset time period, step S5 is performed. The first preset time period is reserved to provide time for caking between feces of the pet and pet litter, so as to prevent such a phenomenon that if the roller 200 rotates before the feces is caked with the pet litter, the roller 200 will be stained by the feces. Specifically, the first preset time period can be 5 minutes, 3 minutes, 10 minutes, and the like.

In an embodiment, before step S5, the method further includes steps:
No change in the weight is detected through the weighing sensor 190 within a first preset time period; and
a flow of the control method is started to be executed from step S 1. In this flow, if no waste clearing action is performed within a consecutive third preset time period, after the third preset time period, the waste clearing action can be directly performed when no change in the weight is detected within the first preset time period. This prevents the impact on use due to excessive waste in the roller 200.

In an embodiment, after step S2, the control method further includes a step:
Step S21, a timer is started, and first time is formed, so as to record a duration, during which, the pet enters the roller 200.

In an embodiment, after step S2, the control method further includes a step:
Step S22, first data is recorded. The first data includes a first weight, a number of times of entry, and a quantity of pets that have entered the roller. The first weight is a weight increased after the pet enters the roller; the number of times of entry is a serial number of a pet entering the roller 200 before clearing; and the quantity of pets that have entered the roller is a quantity of pets that have entered the roller 200 before clearing. A user can monitor a condition of the pet toilet before waste clearing in this embodiment.

In an embodiment, after step S4 and before the step that no change in the weight is detected by the weighing sensor 190 within the first preset time period, the control method further includes steps:
S42, the timer is stopped. That is, the first time is stay time after the pet enters the roller 200.
S45, the first data is matched. That is, the first time is matched with the first weight obtained after a pet enters the roller 200 at the last time and the quantity of pets that have entered the roller, so as to determine data indicating a serial number of a pet that have entered the roller 200 at the first time.
S43, whether the first time is greater than a second preset time period is determined.
S44, if so, an actual number of times of defecation is recorded, wherein the actual number of times of defecation is a quantity of pets that have entered the roller 200 before clearing and stay in the roller 200 for the second preset time period.

It should be understood that when the first time is greater than the second preset time period, it is determined that the pet enters the roller 200 for defecation, rather than jumping into the roller 200 and then directly jumping out of the roller 200 while playing, so as to reduce the misjudgment of performing the waste clearing action.

In addition, it should be noted that step S45 and step S42 do not have an execution order, and the execution order of step S45 and step S42 is not limited here.

In an embodiment, after step S43, the control method further includes a step:
S431, if no, the quantity of pets that have entered the roller is subtracted by 1, and the first weight is cleared; and step S41 is executed. That is, when the first time is less than the second preset time period, it indicates that the pet does not use the toilet in the roller 200, which is an invalid number of times of defecation.

Specifically, in the embodiment described above, the second preset time period can be 5 seconds, 7 seconds, and the like, and manufacturers can customize the second preset time period according to a need.

In an embodiment, after step S5, the control method further includes a step:
S6, the first time and the first data are cleared. This can release data and prevent data accumulation from affecting the running speed of the entire method.

In an embodiment, after step S3, the control method further includes a step:
S31, no increase in the distance is detected through the distance sensor 170;
step S431 is executed, namely, the quantity of pets that have entered the roller is subtracted by 1, and the first weight is cleared; and step S44 is executed. Based on this, it can be proven that this is invalid defecation data. The data needs to be removed to facilitate monitoring a valid actual number of times of defecation.

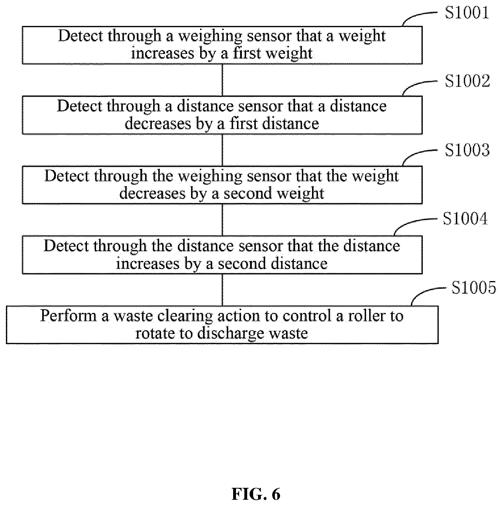

Specifically, referring to FIG. 6, in actual application, the control method described above can limit an increased weight, a decreased weight, an increased distance, and a decreased distance. A specific control method is as follows:
S1001, it is detected through the weighing sensor 190 that a weight increases by a first weight;
S 1002, it is detected through the distance sensor 170 that a distance decreases by a first distance;
S1003, it is detected through the weighing sensor 190 that the weight decreases by a second weight;
S 1004, it is detected through the distance sensor 170 that the distance increases by a second distance; and
S1005, a waste clearing action is performed to control the roller 200 to rotate to discharge waste.

A normal pet cat usually has a weight of more than 350 g, which means that both the first weight and the second weight can be 350 g; the first distance can be 10 cm; and the second distance can be 6 cm. Of course, manufacturers can also customize the first weight, the second weight, the first distance, and the second distance according to needs.

In this state, to perform the waste clearing action, it is necessary to first detect through the weighing sensor 190 that the weight increases by 350 g, then detect through the distance sensor 170 that the distance decreases by 10 cm, detect through the weighing sensor 190 that the weight decreases by 350 g, and detect through the distance sensor 170 that the distance increases by 6 cm. Due to the fact that the position of the pet litter will change after a pet enters the roller 200, the first distance will not be greater than 10 cm, so as to limit the second distance to be less than the first distance to execute the following steps.

It should be noted that all directional indications (such as up, down, left, right, front, back...) in the embodiments of the present disclosure are only used to explain a relative positional relationship between components, motion situations, etc. at a certain specific attitude (as shown in the figures). If the specific attitude changes, the directional indication also correspondingly changes.

In addition, the descriptions of "first", "second", etc. in the present disclosure are only used for descriptive purposes, and cannot be understood as indicating or implying its relative importance or implicitly indicating the number of technical features indicated. Therefore, features defined by "first" and "second" can explicitly instruct or impliedly include at least one feature. In addition, "and/or" in the entire text includes three solutions. A and/or B is taken as an example, including technical solution A, technical solution B, and technical solutions that both A and B satisfy. In addition, the technical solutions between the various embodiments can be combined with each other, but it needs be based on what can be achieved by those of ordinary skill in the art. When the combination of the technical solutions is contradictory or cannot be achieved, it should be considered that such a combination of the technical solutions does not exist, and is not within the scope of protection claimed by the present disclosure.

The above descriptions are only preferred embodiments of the present disclosure, and are not intended to limit the patent scope of the present disclosure. Any equivalent structural transformation made by using the content of the specification and the drawings of the present disclosure under the invention idea of the present disclosure, directly or indirectly applied to other related technical fields, shall all be included in the scope of patent protection of the present disclosure.

## Claims

1. A pet toilet, wherein the pet toilet comprises a circuit board, a weighing sensor, a distance sensor, a base, and a roller rotatably arranged on the base;
the weighing sensor is electrically connected to the circuit board and is configured to detect a weight, and the distance sensor is electrically connected to the circuit board and is configured to measure a distance; and
the circuit board controls the roller to rotate according to a signal fed back by the weighing sensor and a signal fed back by the distance sensor when a pet enters the roller.

2. The pet toilet according to claim 1, wherein the weighing sensor is arranged on the base or the roller; a supporting column is arranged on the base; the distance sensor is located on the supporting column; a first opening is formed in an end surface, corresponding to the supporting column, of the roller; and at an initial position, the distance sensor is arranged in a manner of corresponding to the first opening.

3. The pet toilet according to claim 2, wherein the first opening is located on a central axis of rotation of the roller.

4. The pet toilet according to claim 1, wherein a rear end surface of the roller is provided with a first gear; an upper surface of the base is sunken downwards to form an avoiding slot matched with the roller; one end of the supporting column located in the avoiding slot is opposite to an end surface of the roller; the avoiding slot is provided with a first receiving slot for carrying two ends of the roller; the base is provided with a motor electrically connected to the circuit board to drive the roller to rotate; a rotating shaft of the motor is connected with a second gear engaged with the first gear; the second gear is located on the first receiving slot; and the roller rotates through the first gear when the motor drives the second gear to rotate.

5. The pet toilet according to claim 44, wherein the base is provided with a Hall sensor electrically connected to the circuit board; the roller is provided with several magnetic suction pieces used in conjunction with the Hall sensor; and the circuit board drives the motor according to an electrical signal fed back by the Hall sensor.

6. The pet toilet according to claim 5, wherein a second opening configured to waste or pet litter is formed in the roller; the second opening is located at a top of the roller when the roller is at the initial position; the base is provided with a collection cavity for collecting waste; a third opening communicated to the collection cavity is formed in the base; and the second opening is opposite to the third opening in the rotating process of the roller.

7. The pet toilet according to claim 6, wherein the Hall sensor is located on a supporting column; there are two magnetic suction pieces; one magnetic suction piece is opposite to the Hall sensor when the roller is at the initial position; and the other magnetic suction piece is opposite to the Hall sensor when the third opening directly faces the second opening.

8. A control method applicable to the pet toilet according to claim 1, wherein the control method comprises:
detecting through the weighing sensor that a weight increases;
detecting through the distance sensor that a distance decreases;
detecting through the weighing sensor that the weight decreases;
detecting through the distance sensor that the distance increases; and
performing a waste clearing action to control the roller to rotate to discharge waste.

9. The control method for the pet toilet according to claim 8, wherein after the step of detecting through the distance sensor that a distance decreases, the control method further comprises a step of:
if no, recording an increased weight.

10. The control method for the pet toilet according to claim 8, wherein before the step of performing a waste cleaning action, the control method further comprises a step of:
detecting no change in the weight through the weighing sensor within a first preset time period.

11. The control method for the pet toilet according to claim 10, wherein after the step of detecting that a distance decreases through the distance sensor, the control method further includes steps of:
starting a timer, and forming first time;
recording first data, wherein the first data comprises a first weight, a number of times of entry, and a quantity of pets that have entered the roller; the first weight is a weight increased after the pet enters the roller; the number of times of entry is a serial number of a pet entering the roller before clearing; and the quantity of pets that have entered the roller is a quantity of pets that have entered the roller before clearing.

12. The control method for the pet toilet according to claim 11, wherein after the step of detecting through the distance sensor that the distance increases and before the step of "detecting no change in the weight through the weighing sensor within a first preset time period", the control method further comprises:
stopping the timer;
matching the first data;
determining whether the first time is greater than a second preset time period; and
if so, recording an actual number of times of defecation, wherein the actual number of times of defecation is a quantity of pets that have entered the roller before clearing and stay in the roller for the second preset time period.

13. The control method for the pet toilet according to claim 12, wherein after the step of determining whether the first time is greater than a second preset time period, the control method further comprises steps of:
if no, subtracting the quantity of pets that have entered the roller by 1, and clearing the first weight.

14. The control method for the pet toilet according to claim 13, wherein after the step of performing a waste cleaning action, the control method further comprises a step of:
clearing the first time and the first data.

15. The control method for the pet toilet according to claim 14, wherein before the step of performing a waste cleaning action, the control method further comprises steps of:
detecting a change in the weight within a first preset time period; and
starting to perform the control method from the step of detecting through the weighing sensor that a weight increases.
